# NEW EUROPEAN PATENT SPECIFICATION

(11) **EP 2 681 250 B2**
(45) Date of publication and mention of the opposition decision: **14.11.2018**
(45) Mention of the grant of the patent: 15.04.2015
(21) Application number: 12708109.9
(22) Date of filing: 01.03.2012
(51) Int. Cl.: C08F 10/02, B29C 47/02, C08F 2/38, C08F 4/34, B29C 47/00, C08F 110/02, C08F 210/02

(54) **PROCESS FOR PREPARING ETHYLENE HOMOPOLYMERS OR COPOLYMERS IN A TUBULAR REACTOR WITH AT LEAST TWO REACTION ZONES HAVING DIFFERENT CONCENTRATIONS OF CHAIN TRANSFER AGENT**
VERFAHREN ZUR HERSTELLUNG VON ETHYLEN-HOMOPOLYMEREN ODER -COPOLYMEREN IN EINEM ROHRREAKTOR MIT MINDESTENS ZWEI REAKTIONSZONEN MIT VERSCHIEDENEN KONZENTRATIONEN EINES KETTENÜBERTRAGUNGSMITTELS
PROCÉDÉ POUR LA PRÉPARATION D'HOMOPOLYMÈRES OU DE COPOLYMÈRES D'ÉTHYLÈNE DANS UN RÉACTEUR TUBULAIRE DOTÉ D'AU MOINS DEUX ZONES DE RÉACTION PRÉSENTANT DES CONCENTRATIONS DIFFÉRENTES EN AGENT DE TRANSFERT DE CHAÎNE

(30) Priority: 03.03.2011 EP 11001770; 18.07.2011 US 201161508815 P
(43) Date of publication of application: 08.01.2014
(73) Proprietor: Basell Polyolefine GmbH, 50389 Wesseling (DE)
(72) Inventor: VITTORIAS, Iakovos, 55129 Mainz (DE); GALL, Barbara, 89312 Günzburg (DE); WEIAND, Sebastian, 50996 Köln (DE); GONIOUKH, Andrei, 50374 Erftstadt (DE); SCHMITZ, Stephan, 50999 Köln (DE); BERHALTER, Klaus, 53332 Bornheim-Dersdorf (DE); MANNEBACH, Gerd, 56294 Münstermaifeld (DE); BUSCH, Markus, 64560 Riedstadt (DE); HERRMANN, Thomas, 51103 Köln (DE)
(74) Representative: Seelert, Stefan
(86) International application number: PCT/EP2012/053484
(87) International publication number: WO 2012/117039

(56) References cited:
- EP-A2- 1 589 043
- US-A- 3 334 081
- US-A- 4 014 859
- US-A1- 2004 247 493
- US-A1- 2010 087 606
- KIM D.-M.; IEDEMA P.D.: 'MOLECULAR WEIGHT DISTRIBUTION IN LOW-DENSITY POLYETHYLENE POLYMERIZATION; IMPACTOF SCISSION MECHANISMS IN THE CASE OF A TUBULAR REACTOR' CHEMICAL ENGINEERING SCIENCE vol. 59, no. 10, 01 May 2004, OXFORD, GB, pages 2039 - 2052, XP004506289
- ASTEASUAIN M.; BRANDOLIN A.: 'OPTIMAL OPERATION OF ETHYLENE POLYMERIZATION REACTORS FOR TAILORED MOLECULAR WEIGHT DISTRIBUTION' JOURNAL OF APPLIED POLYMER SCIENCE vol. 105, no. 5, 05 September 2007, pages 2621 - 2630, XP055258661
- BUSCHOW K.H. ET AL: 'POLYETHYLENE: HIGH-PRESSURE' ENCYCLOPEDIA OF MATERIALS - SCIENCE AND TECHNOLOGY 01 January 2001, pages 7181 - 7184, XP055258674 DOI: 10.1016/B0-08-043152-6/01273-0
- NEILEN M. ET AL: 'TUBULAR LDPE IS THE FUTURE OF EXTRUSION COATING' TAPPI, SESSION 3.1; PAPER 7651 2007, ATHENS,

## Description

The present invention relates to a process for preparing ethylene homopolymers or copolymers in the presence of free-radical polymerization initiator and at least one chain transfer agent at pressures in the range of from 110 MPa to 350 MPa and temperatures in the range of from 100°C to 350°C in a tubular reactor with at least two reaction zones having different concentrations of the chain transfer agent, and it further relates to ethylene homopolymers or copolymers obtainable by such a process, to the use of the ethylene homopolymers or copolymers for extrusion coating and to a process for extrusion coating a substrate selected from the group consisting of paper, paperboard, polymeric film, and metal with such ethylene homopolymers or copolymers.

Polyethylene is the most widely used commercial polymer. It can be prepared by a couple of different processes. Polymerization in the presence of free-radical initiators at elevated pressures was the method first discovered to obtain polyethylene and continues to be a valued process with high commercial relevance for the preparation of low density polyethylene (LDPE). LDPE is a versatile polymer which can be used in a variety of applications, such as film, coating, molding, and wire and cable insulation. There is consequently still demand for optimizing the processes for its preparation.

Common reactors for preparing LDPE polymers at high pressures are either tubular reactors or stirred autoclave reactors. The advantages of polymerizing in a tubular reactor are that higher turnovers can be achieved in the polymerization process, the process is easier to scale-up and it is accordingly possible to build "world-scale" plants and the polymerization is in general more economic because of a lower specific consumption of utilities such as electricity and cooling water. However, the LDPE polymers prepared in a tubular high-pressure reactor have certain disadvantages for some applications. Compared to LDPE polymers of similar melt flow rate (MFR) and density prepared in a high-pressure autoclave LDPE reactor, the LDPE polymers prepared in a tubular reactor have in general a narrower molecular weight distribution and a lower amount of long-chain branching (LCB).

An example for an application, in which LDPE prepared in a tubular reactor is inferior to LDPE prepared in an autoclave reactor, is extrusion coating. In this process, the molten LDPE is extruded through a slit-die and casted into a film, which is then coated onto a substrate such as paper, paperboard, a polymeric film like a polyethylenterephthalat (PET) film or a biaxially-oriented poly-propylene (BOPP) film, or a metal like an aluminum foil. For a good processability, the LDPE has to show a stable web, i.e. the film casted out of the die shall not oscillate, and a low neck-in is required, i.e. the ratio of the width of the film over the width of the die should not be too low. Furthermore, high processing temperatures of up to 350°C are required for the post-treatment of the produced polymer film in order to enhance its adhesion properties at substrates such as metal, paper, or paperboard. To fulfill these requirements a certain breadth of the molecular weight distribution and a relatively high level of LCB in the polymer chains with a higher molecular weight are advantageous.

For broadening the molecular weight distribution of ethylene copolymers obtained by free-radical polymerization in a tubular reactor with multiple reaction zones, EP 1 589 043 A2 describes a process with reduced or no injection of chain transfer agent at a downstream reaction zone. WO 2004/108271 A1 discloses a process for the polymerization of ethylene in a tubular reactor with multiple reaction zones, in which streams of different concentration of chain transfer agent are fed to the reactor at different positions and the transfer agent-rich stream is fed to a reaction zone upstream of a downstream reaction zone receiving the transfer agent-poor stream. The obtained ethylene polymers are however not fully suited for being extrusion coated on substrates such as metal, paper, or paperboard.

Thus, it was the object of the present invention to overcome the disadvantages of present LDPE polymers prepared by polymerization in a tubular reactor and provide a possibility to prepare in a tubular reactor LDPE polymers which are suitable for extrusion coating applications and which have with a broader molecular weight distribution and an increased level of LCB in the polymer chains with a higher molecular weight than common LDPE polymers prepared in a tubular high-pressure reactor.

We found that this object is achieved by a process for preparing ethylene homopolymers or copolymers in the presence of free-radical polymerization initiator and at least one chain transfer agent selected from the group consisting of aliphatic and olefinic hydrocarbons, ketones, aldehydes and saturated aliphatic alcohols at pressures in the range of from 110 MPa to 350 MPa and temperatures in the range of from 100°C to 350°C in a tubular reactor with at least two reaction zones having different concentrations of the chain transfer agent, in which the non-polymerized components of the reaction mixture leaving the reactor are separated from obtained polymer and the non-polymerized components of the reaction mixture are recirculated to the tubular reactor, wherein only fresh monomer and no recycled non-polymerized components of the reaction mixture are fed to the first polymerization zone and the recycled non-polymerized components of the reaction mixture and optional further fresh monomer are fed to a more downstream reaction zone and wherein no fresh transfer agent is added to the first reaction zone and the polymerization in the first reaction zone is carried out in the absence of the chain transfer agent.

Furthermore, we have found ethylene homopolymers or copolymers obtainable by such a process, the use of the ethylene homopolymers or copolymers for extrusion coating and a process for extrusion coating a substrate selected from the group consisting of paper, paperboard, polymeric film, and metal, with such ethylene homopolymers or copolymers.

The features and advantages of the present invention can be better understood via the following description and the accompanying drawings where Figures 1 shows schematically a set-up of a tubular polymerization reactors which can be used in the process of the present invention. Figure 2 depicts the set-up of a tubular polymerization reactor of the prior art. Figure 4 illustrates the temperature profile along the tubular reactor for the examples of the present application and Figure 5 depicts the molecularweight distributions of the obtained polymers.

The process of the invention can be used both for the homopolymerization of ethylene and for the copolymerization of ethylene with one or more other monomers, provided that these monomers are free-radically copolymerizable with ethylene under high pressure. Examples of suitable copolymerizable monomers are α,β-unsaturated C₃-C₈-carboxylic acids, in particular maleic acid, fumaric acid, itaconic acid, acrylic acid, methacrylic acid and crotonic acid, derivatives of α,β-unsaturated C₃-C₈-carboxylic acids, e.g. unsaturated C₃-C₁₅-carboxylic esters, in particular esters of C₁-C₆-alkanols, or anhydrides, in particular methyl methacrylate, ethyl methacrylate, n-butyl methacrylate ortert-butyl methacrylate, methyl acrylate, ethyl acrylate, n-butyl acrylate, 2-ethylhexyl acrylate, tert-butyl acrylate, methacrylic anhydride, maleic anhydride or itaconic anhydride, and 1-olefins such as propene, 1-butene, 1-pentene, 1-hexene, 1-octene or 1-decene. In addition, vinyl carboxylates, particularly preferably vinyl acetate, can be used as comonomers. Propene, 1-hexene, acrylic acid, n-butyl acrylate, tert-butyl acrylate, 2-ethylhexyl acrylate, vinyl acetate or vinyl propionate are particularly advantageously used as comonomer.

In the case of copolymerization, the proportion of comonomer or comonomers in the reaction mixture is from 1 to 45% by weight, preferably from 3 to 30% by weight, based on the amount of monomers, i.e. the sum of ethylene and other monomers. Depending on the type of comonomer, it can be preferred to feed the comonomers at a plurality of different points to the reactor.

For the purposes of the present invention, polymers are all substances which are made up of at least two monomer units. They are preferably LDPE polymers having an average molecular weight Mₙ of more than 20 000 g/mole. However, the method of the invention can also be advantageously employed in the preparation of oligomers, waxes and polymers having a molecular weight Mₙ of less than 20 000 g/mole.

Possible initiators for starting the free-radical polymerization in the respective reaction zones are, for example, oxygen, air, azo compounds or peroxidic polymerization initiators. The process is especially suitable for polymerizations using oxygen, either fed in the form of pure O₂ or as air. In case of initiating the polymerization with oxygen, the initiator is normally first mixed with the ethylene feed and then fed to the reactor. In preferred embodiments to the process such a stream comprising monomer and oxygen is not only fed to the beginning of the tubular reactor but also to one or more points along the reactor creating two or more reaction zones. Initiation using organic peroxides or azo compounds also represents a preferred embodiment of the process of the invention. Examples of suitable organic peroxides are peroxy esters, peroxy ketals, peroxy ketones and peroxycarbonates, e.g. di(2-ethylhexyl) peroxydicarbonate, dicyclohexyl peroxydicarbonate, diacetyl peroxydicarbonate, tert-butyl peroxyisopropylcarbonate, di-tert-butyl peroxide, di-tert-amyl peroxide, dicumyl peroxide, 2,5-dimethyl-2,5-di-tert-butylperoxyhexane, tert-butyl cumyl peroxide, 2,5-dimethyl-2,5-di(tert-butylperoxy)hex-3-yne, 1,3-diisopropyl monohydroperoxide or tert-butyl hydroperoxide, didecanoyl peroxide, 2,5-dimethyl-2,5-di(2-ethylhexanoylperoxy)hexane, tert-amyl peroxy-2-ethylhexanoate, dibenzoyl peroxide, tert-butyl peroxy-2 ethylhexanoate, tert-butyl peroxydiethylacetate, tert-butyl peroxydiethylisobutyrate, tert-butyl peroxy-3,5,5-trimethylhexanoate, 1,1-di(tert-butylperoxy)-3,3,5-trimethylcyclohexane, 1,1-di(tert-butylperoxy)cyclohexane, tert-butyl peroxyacetate, cumyl peroxyneodecanoate, tert-amyl peroxyneodecanoate, tert-amyl peroxypivalate, tert-butyl peroxyneodecanoate, tert-butyl permaleate, tert-butyl peroxypivalate, tert-butyl peroxyisononanoate, diisopropylbenzene hydroperoxide, cumene hydroperoxide, tert-butyl peroxybenzoate, methyl isobutyl ketone hydroperoxide, 3,6,9-triethyl-3,6,9-trimethyl-triperoxocyclononane and 2,2-di(tert-butylperoxy)butane. Azoalkanes (diazenes), azodicarboxylic esters, azodicarboxylic dinitriles such as azobisisobutyronitrile and hydrocarbons which decompose into free radicals and are also referred as C-C initiators, e.g. 1,2-diphenyl-1,2-dimethylethane derivatives and 1,1,2,2-tetramethylethane derivatives, are also suitable. It is possible to use either individual initiators or preferably mixtures of various initiators. A large range of initiators, in particular peroxides, are commercially available, for example the products of Akzo Nobel offered under the trade names Trigonox^{®} or Perkadox^{®}.

In a preferred embodiment of the process of the invention, peroxidic polymerization initiators having a relatively high decomposition temperature are used. Suitable peroxidic polymerization initiators include, for example, 1,1-di(tert-butylperoxy)cyclohexane, 2,2-di(tert-butylperoxy)butane, tert-butyl peroxy-3,5,5-trimethylhexanoate, tert-butyl peroxybenzoate, 2,5-dimethyl-2,5-di(tert-butylperoxy)hexane, tert-butyl cumyl peroxide, di-tert-butyl peroxide and 2,5-dimethyl-2,5-di(tert-butylperoxy)hex-3-yne, and particular preference is given to using di-tert-butyl peroxide or 3,6,9-triethyl-3,6,9-trimethyl-triperoxocyclononane.

The initiators can be employed individually or as a mixture in concentrations of from 0.1 to 50 mol/t of polyethylene produced, in particular from 0.2 to 20 mol/t, in each reaction zone. In a preferred embodiment of the present invention the free-radical polymerization initiator, which is fed to a reaction zone, is a mixture of at least two different azo compounds or organic peroxides. If such initiator mixtures are used it is preferred that these are fed to all reaction zones. There is no limit for the number of different initiators in such a mixture, however preferably the mixtures are composed of from two to six and in particular of four or five different initiators. Particular preference is given to using mixtures of initiators which have different decomposition temperatures.

It is often advantageous to use the initiators in the dissolved state. Examples of suitable solvents are ketones and aliphatic hydrocarbons, in particular octane, decane and isododecane and also other saturated C₈-C₂₅-hydrocarbons. The solutions comprise the initiators or initiator mixtures in proportions of from 2 to 65% by weight, preferably from 5 to 40% by weight and particularly preferably from 10 to 30% by weight.

The process of the present invention is carried out in the presence of at least one chain transfer agent. Chain transfer agents, which are frequently also called modifiers, are commonly added to the radical polymerization to alter the molecular weight of the polymers to be prepared. Examples of suitable modifiers are, aliphatic and olefinic hydrocarbons, e.g. propane, butane, pentane, hexane, cyclohexane, propene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol. Particular preference is given to using saturated aliphatic aldehydes, in particular propionaldehyde, or 1-olefins such as propene or 1-hexene, or aliphatic hydrocarbons such as propane.

The reaction mixture generally comprises polyethylene in an amount in the range of from 0 to 45% by weight, based on the total monomer-polymer mixture, preferably from 0 to 35% by weight.

The process of the invention is carried out at pressures of from 110 MPa to 350 MPa, with pressures of from 160 MPa to 340 MPa being preferred and pressures of from 200 MPa to 330 MPa being particularly preferred. The temperatures are in the range from 100°C to 350°C, preferably from 120°C to 340°C and very particularly preferably from 150°C to 320°C.

The process of the present invention can be carried out with all types of tubular reactors suitable for high-pressure polymerization having at least two reaction zones, preferably from 2 to 6 reaction zones and more preferably from 2 to 5 reaction zones. The number of reaction zones is given by the number of feeding points for the initiator. Such a feeding point can be an injection point for a solution of azo compounds or organic peroxides or a side feed of cold ethylene comprising oxygen or other free-radical polymerization initiator. In all these cases fresh initiator is added to the reactor, where it decomposes into free radicals and initiates further polymerization. The generated heat of the reaction rises the temperature of the reaction mixture, since more heat is generated than can be removed through the walls of the tubular reactor. The rising temperature increases the rate of decomposition of the free-radical initiators and accelerates polymerization until essentially all free-radical initiator is consumed. Thereafter no further heat is generated and the temperature decreases again since the temperature of the reactor walls is lower than that of the reaction mixture. Accordingly, the part of the tubular reactor downstream of an initiator feeding point in which the temperature rises is the reaction zone, while the part thereafter, in which the temperature decreases again, is predominantly a cooling zone.

The amount and nature of added free-radical initiators determines how much the temperature rises and accordingly allows adjusting that value. Normally, the temperature rise is set to be in the range of from 70°C to 170°C in the first reaction zone and 50°C to 130°C for the subsequent reaction zones depending on the product specifications and the reactor configuration.

Suitable tubular reactors are basically long, thick-walled pipes, which are usually from about 0.5 km to 4 km, preferably from 0.75 km to 3 km and especially from 1 km to 2.5 km long. The inner diameter of the pipes is usually in the range of from about 30 mm to 120 mm and preferably from 40 mm to 90 mm. Such tubular reactors have preferably a length-to-diameter ratio of greater than 1000, preferably from 10000 to 40000 and especially from 25000 to 35000.

A typical set-up for a tubular reactor LDPE plant consists essentially of a set of two compressors, a primary and a high-pressure compressor, a tubular polymerization reactor and at least two separators for separating the monomer-polymer mixture leaving the tubular reactor, wherein in a first separator, the high-pressure separator, the non-polymerized components of the reaction mixture separated from the reaction mixture are recycled to the ethylene feed between the primary compressor and the high-pressure compressor, and the non-polymerized components of the reaction mixture separated from the reaction mixture in a second separator, the low pressure separator, are added to the stream of fresh ethylene before it is fed to the primary compressor. Typically the separation of the obtained polymer from the non-polymerized components of the reaction mixture occurs in the high-pressure stage at a pressure of from 10 to 50 MPa and in the low-pressure stage at a pressure of from 0.1 to 10 MPa. Such a high-pressure polymerization unit normally further includes apparatuses like extruders and granulators for pelletizing the obtained polymer. Monomer supply to the tubular reactor can either be carried out solely in the beginning of the reactor or only partly in the beginning with the other part fed via one or more side feed entries.

According to the present invention the polymerization is carried out in a tubular reactor with at least two reaction zones having different concentrations of at least one chain transfer agent, wherein the polymerization in the first reaction zone is carried out in the absence of the chain transfer agent and no fresh chain transfer agent is added to the first reaction zone.

Since common chain transfer agents such as propionaldehyde or propene are not fully consumed when the reaction mixture leaves the tubular reactor, a major proportion of the added chain transfer agent is recycled to the compressor together with the non-reacted ethylene. This occurs primarily via the high-pressure circuit of the ethylene separated from the reaction mixture in the high-pressure separator. To have a lower chain transfer agent concentration in the first reaction zone it is accordingly not only necessary to have no fresh chain transfer agent added to that reaction zone but also not to feed recycled ethylene to the first reaction zone.

This can be achieved by feeding the recycled non-polymerized components of the reaction mixture to the tubular reactor downstream of the first reaction zone. In the present invention a stream of fresh monomer, i.e. of fresh ethylene or of a mixture of fresh ethylene and of one or more fresh comonomers, which contains no chain transfer agent, is fed to the first reaction zone and the stream of recycled non-polymerized components of the reaction mixture, predominantly ethylene, and optional further fresh monomer is fed to a more downstream reaction zone, i.e. to the tubular reactor downstream of the first reaction zone. It is accordingly prevented that recycled chain transfer agent is present in the first reaction zone. Preferably, the ratio of the feed of fresh monomer to the inlet of the tubular reactor, i.e. the first reaction zone, to the total feed of monomer, i.e. to the sum of the feeds of fresh monomer and of recycled monomer, is from 1:100 to 1:1, more preferably from 1:20 to 3:4 and especially from 1:5 to 1:2, based on the weights of the fed monomers.

It is possible to supply the whole part of the tubular reactor, which, when compared to the common configuration of producing LDPE in a tubular reactor, forms the first reaction zone, solely with fresh monomer. However, as a consequence of the lower amount of fed ethylene the residence time of the reaction mixture in that part of the reactor is drastically increased. It is thus also possible to divide the part of the tubular reactor, which normally forms the first reaction zone, in two zones, i.e. to add somewhere in the middle of the part of the tubular reactor, which normally forms the first reaction zone, an inlet for the recycle stream and an additional feeding point for initiator. Consequently, an additional reaction zone is created.

By polymerizing in the absence of chain transfer agent it possible to obtain a significant amount of high- and ultra-high molecular weight polymer chains in the first reaction zone. These polymer chains are then present in the subsequent reaction zones, where long-chain branched polymer chains are produced by grafting growing chains or fragments of previously obtained chains on previously obtained backbone chains. If the chains or fragments of high- or ultra-high molecular weight are present over the whole length of the tubular reactor the probability of producing a high proportion of long-chain branched high molecular weight polymer chains is much higher than if the high- and ultra-high molecular weight polymer chains are only produced in the last reaction zone.

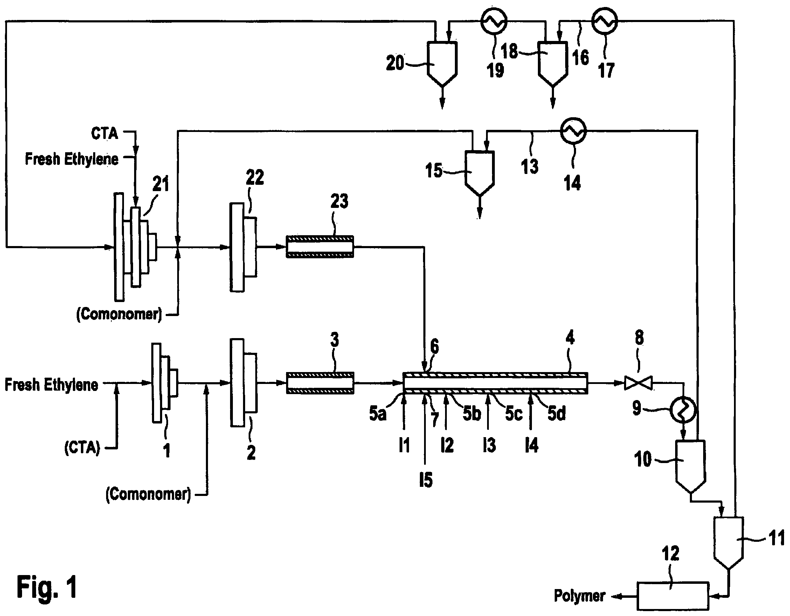

Figure 1 shows a typical set-up for a suitable tubular polymerization reactor without however restricting the invention to the embodiments described therein.

A part of the fresh ethylene, which is usually under a pressure of 1.7 MPa, is firstly compressed to a pressure of about 30 MPa by means of a primary compressor (1) and then compressed to the reaction pressure of about 300 Mpa using a high-pressure compressor (2). Optionally, a low amount of fresh chain transfer agent (CTA) can be added to that stream of fresh ethylene. The reaction mixture leaving the high-pressure compressor (2) is fed to pre-heater (3), where the reaction mixture is preheated to the reaction start temperature of from about 120°C to 220°C, and then conveyed to the tubular reactor (4). Optionally, comonomer can be added between primary compressor (1) and high-pressure compressor (2).

The tubular reactor (4) is basically a long, thick-walled pipe with cooling jackets to remove the liberated heat of reaction from the reaction mixture by means of a coolant circuit (not shown).

The tubular reactor (4) shown in Figure 1 has four initiator injection points (5a) to (5d) for feeding initiators or initiator mixtures I1 to I4 to the reactor, which are arranged in a way that the four zones of the tubular reactor from one of these four initiator injection points to the next or from the last of these initiator injection points to the end of the reactor are approximately of the same length. The feeding point for the recycled ethylene (6) and a further initiator injection point (7) for feeding an additional initiator or initiator mixture I5 are located at a position between initiator injection points (5a) and (5b), i.e. between the first and the second of the equidistant initiator injection points (5a) to (5d). Accordingly, the set-up shown in Figure 1 has five reaction zones with two of them being positioned in the part of the tubular reactor between initiator injection points (5a) and (5b).

The reaction mixture leaves the tubular reactor (4) through a high-pressure let-down valve (8) and passes a post-reactor cooler (9). Thereafter, the resulting polymer is separated off from unreacted ethylene and other low molecular weight compounds (monomers, oligomers, polymers, additives, solvent, etc.) by means of a high-pressure separator (10) and a low-pressure separator (11), discharged and pelletized via an extruder and granulator (12).

The ethylene which has been flashed off in the high-pressure separator (10) is fed back to the reactor (4) in the high-pressure circuit (13) at about 30 MPa. Figure 1 shows one purification stage consisting of a heat exchanger (14) and a separator (15). It is however also possible to use a plurality of purification stages. The high-pressure circuit (13) usually separates waxes and also recycles the major part of the not consumed chain transfer agent.

The ethylene which has been flashed off in the low-pressure separator (11), which further comprises, inter alia, the major part of the low molecular weight products of the polymerization (oligomers) and the solvent, is worked up in the low-pressure circuit (16) at a pressure of from about 0.1 to 0.5 MPa in a plurality of separators with a heat exchanger being located between each of the separators. Figure 1 shows two purification stages consisting of heat exchangers (17) and (19) and separators (18) and (20). It is however also possible to use only one purification stages or preferably more than two purification stages. The low-pressure circuit (16) usually separates oil and waxes.

The ethylene recycled in the low-pressure circuit (16) is fed to a main primary compressor (21), combined with the ethylene recycled in the high-pressure circuit (13), further compressed to the reaction pressure of about 300 MPa using a main high-pressure compressor (22) and then fed via cooler (23) to the tubular reactor at feeding point (6). The remaining part of the fresh ethylene and the chain transfer agent for adjusting the properties of the resulting polymer are also fed to main primary compressor (21). Furthermore, comonomer can be added between main primary compressor (21) and main high-pressure compressor (22).

The set-up shown in Figure 1 has the specific characteristic that it requires two sets of compressors instead of one as in the common configuration for producing LDPE in a tubular reactor. Starting from a set-up with a side-feed of ethylene it is however possible to arrive at a configuration of a tubular polymerization reactor suitable for carrying out the process of the present invention without the need of significantly altering the arrangement.

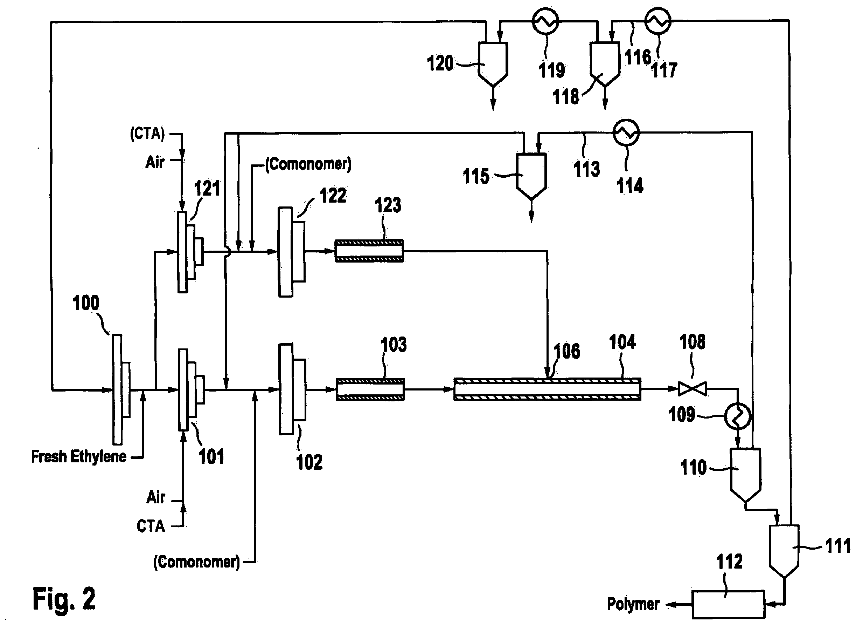

Figure 2 depicts the set-up of a tubular polymerization reactor with a side-feed of ethylene according to the prior art. Fresh ethylene is fed to the recycled ethylene leaving a flash-gas compressor (100). The mixture is partly fed to a primary compressor (101), compressed there to a pressure of about 30 MPa and then further compressed to the reaction pressure of about 300 MPa using a high-pressure compressor (102). Air as oxygen source, or alternatively pure O₂, and chain transfer agent (CTA) are added to the primary compressor (101). Furthermore, comonomer can be added between primary compressor (101) and high-pressure compressor (102). The reaction mixture leaving the high-pressure compressor (102) is fed to a pre-heater (103), where the reaction mixture is preheated to the reaction start temperature of from about 120°C to 220°C, and is then conveyed to the tubular reactor (104), which is equipped with cooling jackets to remove the liberated heat of reaction from the reaction mixture by means of a coolant circuit (not shown).

The other part of the mixture of fresh ethylene and the recycled ethylene leaving the flash-gas compressor (100) is fed first to a second primary compressor (121), compressed there to a pressure of about 30 MPa and then further compressed to the reaction pressure using a second high-pressure compressor (122). Air as oxygen source, or alternatively pure O₂, is fed to the second primary compressor (121) and comonomer can be added between second primary compressor (121) and the second high-pressure compressor (122). Furthermore, also an additional amount of fresh chain transfer agent can be fed to the second primary compressor (121). Preferably, the added amount of fresh chain transfer agent is either fed in equal amounts to the primary compressor (101) and to the second primary compressor (121) or the whole amount of the fresh chain transfer agent is fed to the primary compressor (101).

The reaction mixture leaving the second high-pressure compressor (122) is fed as cold mixture via cooler (123) to the tubular reactor (104) at point (106). The temperature of this side stream is controlled by controller (123) in way that the temperature of the combined main and side streams is preferably in the range of from 160°C to 220°C, more preferably of from 170°C to 200°C, and especially of from 180°C to 190°C. The feed of the additional oxygen starts further polymerization downstream of point (106), thus creating a second reaction zone. There could also be additional points along the tubular reactor to which cold reaction mixture is fed. Preferably the number of side feeds to reactor is from 1 to 4 and in particular 1 or 2 and most preferably 1.

The reaction mixture leaves the tubular reactor (104) through a high-pressure let-down valve (108) and passes a post-reactor cooler (109). Thereafter, the resulting polymer is separated from unreacted ethylene and other low molecular weight compounds by means of a high-pressure separator (110) and a low-pressure separator (111), discharged and pelletized via an extruder and granulator (112).

The ethylene which has been flashed off in the high-pressure separator (110) is fed back to the tubular reactor (104) in the high-pressure circuit (113) at about 30 MPa. It is first freed from other constituents in at least one purification stage and then added to the monomer stream to the inlet end of the tubular reactor (104) between the primary compressor (101) and the high-pressure compressor (102) and to the monomer feed stream side between the primary compressor (121) and the high-pressure compressor (122). Figure 2 shows one purification stage consisting of a heat exchanger (114) and a separator (115). It is however also possible to use a plurality of purification stages.

The ethylene which has been flashed off in the low-pressure separator (111), which further comprises, inter alia, the major part of the low molecular weight products of the polymerization (oligomers) and the solvent of the initiators, is worked up in the low-pressure circuit (116) at a pressure of from about 0.1 to 0.5 MPa in a plurality of separators with a heat exchanger being located between each of the separators and then fed to flash-gas compressor (100). Figure 2 shows two purification stages consisting of heat exchangers (117) and (119) and separators (118) and (120). It is however also possible to use only one purification stages or preferably more than two purification stages.

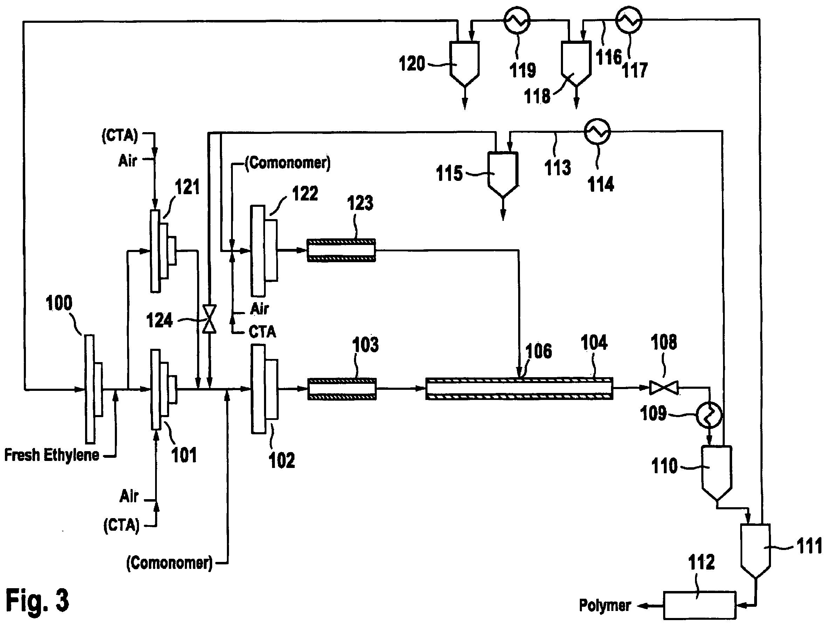

Figure 3 shows a modification of the set-up shown in Figure 2. In this modification, the mixture which as been compressed in the primary compressor (121) is no longer fed to the high-pressure compressor (122) and then to feeding point (106) but combined with the mixture leaving the other primary compressor (101) and fed via the high-pressure compressor (102) to the inlet of the tubular reactor (104). Instead, the ethylene recycled in the high-pressure circuit (113) is combined with air as oxygen source, or alternatively with pure O₂, the chain transfer agent for adjusting the properties of the resulting polymer and optionally comonomer and this mixture is fed to the high-pressure compressor (122) for entering the tubular reactor (104) at feeding point (106). Optionally, a low amount of fresh chain transfer agent (CTA) can additionally be fed to the primary compressor (101) and to the second primary compressor (121). Furthermore, a part of the ethylene recycled in the high-pressure circuit (113) can optionally be fed via a valve (124) to the mixture entering the high-pressure compressor (102).

The set-up shown in Figure 3 allows excluding the ethylene recycled in the high-pressure circuit (113), which contains the major part of recycled chain transfer agent, from entering the first polymerization zone. Only fresh ethylene and the ethylene recycled in the low-pressure circuit (116), which contains no or only a very small concentration of chain transfer agent, is fed to the first polymerization zone as long as not deliberately a part of the ethylene recycled in the high-pressure circuit (113) is also fed to the inlet of the tubular reactor (104) via valve (124).

Instead of using oxygen for initiating the polymerization reaction it is also possible in a variation of the set-up shown in Figure 3 to use organic peroxides or mixtures of organic peroxides. Such a feeding of organic peroxides or mixture of organic peroxides can replace the feeding of oxygen to the ethylene recycled in the high-pressure circuit (113) upstream of the high-pressure compressor (122). The organic peroxide or the mixture of organic peroxides is then injected in one or more initiator injection points upstream or downstream of feeding point (106) to the reactor. It is however also possible to replace both the feeding of oxygen to the ethylene recycled in the high-pressure circuit (113) and the feeding of oxygen to primary compressors (101) and (121) by feeding organic peroxides or mixtures of organic peroxides to the reactor.

The present invention further refers to ethylene copolymers obtainable by the above-described process. These ethylene homopolymers and copolymers have a significantly broadened molecular weight distribution compared to LDPE normally obtained from free-radical polymerization in tubular reactors. They however also differ from LDPE obtained from free-radical polymerization in autoclave reactors by not having a too high amount of long-chain branching. Because of their molecular structure they are accordingly especially suitable for being used in extrusion coating processes. They have superior melt stability during processing, i.e. high web-stability and low neck-in, and a potential of superior adhesion on the substrate such as such as paper, paper-board, polymeric film, or metal. Consequently, the present invention also refers to the use of the ethylene copolymers for extrusion coating and to a process for extrusion coating a substrate selected from the group consisting of paper, paperboard, polymeric film, and metal, with these ethylene copolymers.

The invention is illustrated below with the aid of examples, without being restricted thereto.

### Examples

### Comparative Example A

A simulation of a common homopolymerization of ethylene in a high-pressure tubular reactor was carried out using the commercial polymerization modeling software PREDICI of Dr. Michael Wulkow Computing in Technology GmbH (CiT), Rastede, Germany. The kinetic data for the homopolymerization of ethylene were taken from M. Busch, Macromol. Theory Simul. 2001, 10, 408 - 429.

The reactor was assumed to have four initiator injection points and be of a design similar to that shown in Figure 1, however without the primary compressor (1) and the high-pressure compressor (2) and the reaction mixture leaving the high-pressure compressor (22) being fed to the pre-heater (3). Thus, all fresh ethylene was assumed to be fed to the primary compressor (21) and no initiator I5 fed to point (7). The reactor was assumed to have in total a length of 2000 m and a diameter of 76 mm. The calculation was carried out based on the following assumptions:
- ethylene throughput of the high-pressure compressor 117 metric tons/h;
- feed of propionaldehyde as chain transfer agent to the high-pressure compressor 1.5 kg per ton of produced LDPE;
- temperature of the ethylene feed at the reactor inlet 157°C;
- pressure at the reactor inlet 280 MPa;
- feed of 0.3754 g/s of tert-butyl peroxy-3,5,5-trimethylhexanoate (TBPIN), 0.3610 g/s of di-tert-butyl peroxide (DTBP); 0.1506 g/s of tert-butyl peroxyneodecanoate (TBPND) and 0.3447 g/s of tert-butyl peroxypivalate (TBPP) reactor inlet;
- feed of 0.0476 g/s of tert-butyl peroxy-3,5,5-trimethylhexanoate (TBPIN) and 0.3547 g/s of di-tert-butyl peroxide (DTBP) at a position 640 m downstream of the reactor inlet;
- feed of 0.0521 g/s of tert-butyl peroxy-3,5,5-trimethylhexanoate (TBPIN) and 0.2951 g/s of di-tert-butyl peroxide (DTBP) at a position 1200 m downstream of the reactor inlet; and
- feed of 0.2797 g/s of di-tert-butyl peroxide (DTBP) at a position 1760 m downstream of reactor inlet.

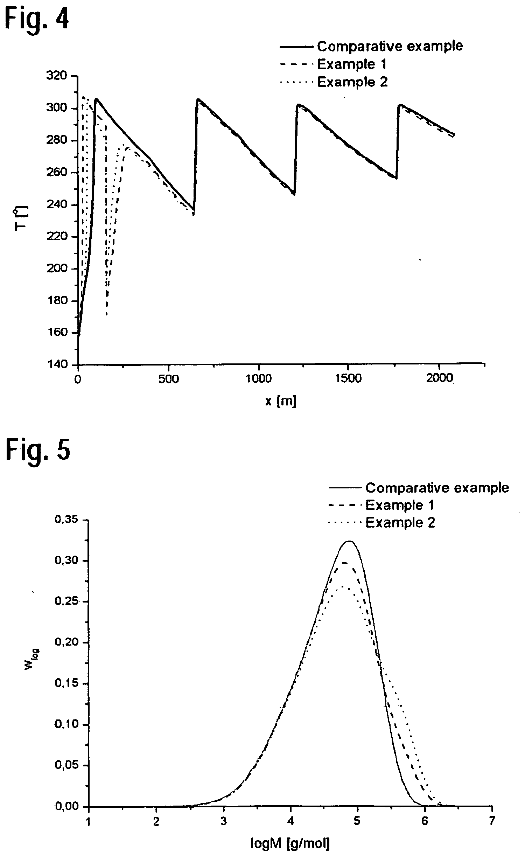

The calculated temperature profile along the tubular reactor is shown in Figure 4 and Figure 5 depicts the obtained molecular weight distribution. The resulting data on the molecular weight distribution and on the long- and short-chain branching, expressed as number of branches per 1000 carbon atoms, of the obtained LDPE and the ethylene conversion are given in Table 1.

### Example 1

The simulation of Comparative Example A was repeated assuming a reactor of the same dimension however with a configuration as shown in Figure 1. The feed of fresh ethylene is divided with only a part of the fresh ethylene fed to the reactor inlet and the majority of the fresh ethylene fed together with the recycled ethylene at a position 160 m downstream of the rector inlet. The calculation was carried based with the assumptions of Comparative Example A except that
- the feed of fresh ethylene to the reactor inlet is 11.7 metric tons/h and the temperature of this stream is 157°C;
- the ethylene throughput of the main high-pressure compressor is 105.3 metric tons/h and the temperature of the stream fed to the reactor is also 157°C;
- the propionaldehyde as chain transfer agent is only added in to the stream ethylene fed to the reactor at the position 160 m downstream of the rector with the same quantity as in Comparative Example A;
- the initiator feed at the reactor inlet is 0.0360 g/s of di-tert-butyl peroxide (DTBP);
- the initiator feed at the position 160 m downstream of the reactor inlet is 0.3750 g/s of tert-butyl peroxy-3,5,5-trimethylhexanoate (TBPIN), 0.3600 g/s of di-tert-butyl peroxide (DTBP); 0.1506 g/s of tert-butyl peroxyneodecanoate (TBPND) and 0.3447 g/s of tert-butyl peroxypivalate (TBPP); and
- the initiator feeds at the positions 640 m, 1200 m and 1760 m downstream of the reactor inlet are the same as in Comparative Example A.

The calculated temperature profile along the tubular reactor is shown in Figure 4 and Figure 5 depicts the obtained molecular weight distribution. The resulting data on the molecular weight distribution and on the long- and short-chain branching, expressed as number of branches per 1000 carbon atoms, of the obtained LDPE and the ethylene conversion are given in Table 1.

### Example 2

The simulation of Example 1 was repeated except that
- the feed of fresh ethylene to the reactor inlet is 23.4 metric tons/h;
- the ethylene throughput of the main high-pressure compressor is 93.6 metric tons/h and the temperature of the stream fed to the reactor is also 157°C;
- the initiator feed at the reactor inlet is 0.0720 g/s of di-tert-butyl peroxide (DTBP); and
- the initiator feeds at the positions 160 m, 640 m, 1200 m and 1760 m downstream of the reactor inlet are the same as in Example 1.

The calculated temperature profile along the tubular reactor is shown in Figure 4 and Figure 5 depicts the obtained molecular weight distribution. The resulting data on the molecular weight distribution and on the long- and short-chain branching, expressed as number of branches per 1000 carbon atoms, of the obtained LDPE and the ethylene conversion are given in Table 1.

The comparison of Examples 1 and 2 with Comparative Example A shows that, by polymerizing pure ethylene without chain transfer agent in the first reaction zone, the polydispersity of the obtained LDPE, here quantified as M_{w}/Mₙ and as M_{z}/M_{w}, is enhanced and the LCB concentration is preserved. The polymeric structure approaches more the structure of an autoclave LDPE-product, thus the processing properties for extrusion coating will be enhanced.

**Table 1**

| Example/Comparative Example | Mₙ [g/mol] | M_{w} [g/mol] | M_{z} [g/mol] | M_{w}/Mₙ | M_{z}/M_{w} | LCB/1000C | SCB/1000 C | conversion [%] |
|---|---|---|---|---|---|---|---|---|
| A | 14,305 | 79,980 | 185,071 | 5.6 | 2.3 | 2.1 | 16.0 | 29.9 |
| 1 | 15,062 | 104,774 | 341,470 | 6.9 | 3.3 | 1.8 | 17.3 | 27.8 |
| 2 | 15,321 | 129,680 | 426,977 | 8.5 | 3.3 | 1.9 | 17.2 | 28.3 |

## Claims

1. A process for preparing ethylene homopolymers or copolymers in the presence of free-radical polymerization initiator and at least one chain transfer agent selected from the group consisting of aliphatic and olefinic hydrocarbons, ketones, aldehydes and saturated aliphatic alcohols at pressures in the range of from 110 MPa to 350 MPa and temperatures in the range of from 100°C to 350°C in a tubular reactor with at least two reaction zones having different concentrations of the chain transfer agent, in which the non-polymerized components of the reaction mixture leaving the reactor are separated from obtained polymer and the non-polymerized components of the reaction mixture are recirculated to the tubular reactor, wherein only fresh monomer and no recycled non-polymerized components of the reaction mixture are fed to the first polymerization zone and the recycled non-polymerized components of the reaction mixture and optional further fresh monomer are fed to a more downstream reaction zone and wherein no fresh chain transfer agent is added to the first reaction zone and the polymerization in the first reaction zone is carried out in the absence of the chain transfer agent.

2. A process according to claim 1, wherein the ratio of the feed of fresh monomer to the first reaction zone to the total feed of monomer is in the range of from 1:100 to 1:1, based on the weights of the fed monomers.

3. Ethylene homopolymer or copolymer obtainable by a process according to claim 1 or 2.

4. Use of an ethylene homopolymer or copolymer according to claim 3 for extrusion coating.

5. Process for extrusion coating a substrate selected from the group consisting of paper, paperboard, polymeric film, and metal, with an ethylene homopolymer or copolymer according to claim 3.

## Patentansprüche

1. Verfahren zur Herstellung von Ethylen-Homopolymeren oder -Copolymeren in Gegenwart von Radikalpolymerisationsinitiator und mindestens einem Regler ausgewählt aus der Gruppe bestehend aus aliphatischen und olefinischen Kohlenwasserstoffen, Ketonen, Aldehyden und gesättigten aliphatischen Alkoholen bei Drücken im Bereich von 110 MPa bis 350 MPa und Temperaturen im Bereich von 100°C bis 350°C in einem Rohrreaktor mit mindestens zwei Reaktionszonen, die verschiedene Konzentrationen des Reglers aufweisen, wobei die nichtpolymerisierten Komponenten der Reaktionsmischung, die den Reaktor verlässt, von erhaltenem Polymer getrennt werden und die nichtpolymerisierten Komponenten der Reaktionsmischung in den Rohrreaktor rückgeführt werden, wobei nur frisches Monomer und keine wiederverwendeten nichtpolymerisierten Komponenten der Reaktionsmischung in die erste Polymerisationszone eingespeist werden und die wiederverwendeten nichtpolymerisierten Komponenten der Reaktionsmischung und gegebenenfalls weiteres frisches Monomer in eine nachgeschaltete Reaktionszone eingespeist werden, und wobei der ersten Reaktionszone kein frischer Regler zugefügt wird und die Polymerisation in der ersten Reaktionszone in Abwesenheit von Regler durchgeführt wird.

2. Verfahren nach Anspruch 1, wobei das Verhältnis der Zufuhr von frischem Monomer zu der ersten Reaktionszone zur gesamten Zufuhr von Monomer im Bereich von 1:100 bis 1:1, auf die Gewichte der zugeführten Monomere bezogen, liegt.

3. Ethylen-Homopolymer oder -Copolymer, das durch ein Verfahren nach Anspruch 1 oder 2 erhältlich ist.

4. Verwendung eines Ethylen-Homopolymers oder -Copolymers nach Anspruch 3 zum Extrusionsbeschichten.

5. Verfahren zum Extrusionsbeschichten eines Substrats, ausgewählt aus der Gruppe bestehend aus Papier, Karton, Polymerfolie und Metall, mit einem Ethylen-Homopolymer oder -Copolymer nach Anspruch 3.

## Revendications

1. Procédé de préparation d'homopolymères ou de copolymères d'éthylène en présence d'un initiateur de polymérisation par radicaux libres et d'au moins un agent de transfert de chaîne choisi dans le groupe constitué d'hydrocarbures aliphatiques et oléfiniques, de cétones, des aldéhydes et des alcools aliphatiques saturés à des pressions dans la plage de 110 MPa à 350 MPa et à des températures dans la plage de 100°C à 350°C dans un réacteur tubulaire présentant au moins deux zones de réaction présentant différentes concentrations en agent de transfert de chaîne, dans lequel les composants non polymérisés du mélange réactionnel sortant du réacteur sont séparés du polymère obtenu et les composants non polymérisés du mélange réactionnel sont recyclés vers le réacteur tubulaire, un seul monomère frais et aucun composant non polymérisé recyclé du mélange réactionnel étant/n'étant introduit dans la première zone de polymérisation et les composants non polymérisés recyclés du mélange réactionnel et éventuellement d'autres monomères frais supplémentaires étant introduits dans une zone de réaction plus en aval et aucun agent de transfert de chaîne frais n'étant ajouté à la première zone de réaction et la polymérisation dans la première zone de réaction étant réalisée en l'absence de l'agent de transfert de chaîne.

2. Procédé selon la revendication 1, le rapport de l'alimentation en monomère frais dans la première zone de réaction à l'alimentation totale en monomère se situant dans la plage de 1:100 à 1:1, sur base des poids des monomères alimentés.

3. Homopolymère ou copolymère d'éthylène pouvant être obtenu par un procédé selon la revendication 1 ou 2.

4. Utilisation d'un homopolymère ou d'un copolymère d'éthylène selon la revendication 3 pour un revêtement par extrusion.

5. Procédé pour le revêtement par extrusion d'un substrat, choisi dans le groupe constitué par le papier, le carton, un film polymère et le métal, par un homopolymère ou un copolymère d'éthylène selon la revendication 3.
